# EUROPEAN PATENT APPLICATION

(11) **EP 3 162 531 A1**
(43) Date of publication of application: **03.05.2017**
(21) Application number: 15192400.8
(22) Date of filing: 30.10.2015
(51) Int. Cl.: B29C 47/00, B29C 47/10, B29C 47/90, B29C 44/26, B29C 44/34, B29C 44/50, B29C 44/60, E06B 3/263

(54) **METHOD FOR MANUFACTURING FOAMED PROFILES AND FOAMED PROFILES OBTAINABLE BY THE METHOD**

(71) Applicant: Technoform Tailored Solutions Holding GmbH, 34117 Kassel (DE)
(72) Inventor: SIODLA, Thorsten, 34225 Baunatal (DE)
(74) Representative: Kramer Barske Schmidtchen Patentanwälte PartG mbB

(57) **Abstract**

The present invention provides a method for manufacturing foamed profiles using an extruder (1) and a calibration (3), wherein the extruder (1) has a melting part (1a), a pressure reducing part (1b) and an extrusion die (2) having a melt channel (4), wherein the method comprises the steps of melting a mixture comprising a thermoplastic polymer and a chemical foaming agent in the melting part (1a) of the extruder (1), wherein the mixture has a water content of 0.5 wt.-% or less, introducing an inert gas into the molten mixture to obtain a molten mass containing the introduced inert gas, reducing the pressure of the molten mass containing the introduced inert gas in the pressure reducing part (1b), expanding the molten mass having the reduced pressure in the melt channel (4) of the extrusion die (2) and extruding the same, transferring the extruded molten mass into the calibration (3), whereby the extruded molten mass is cooled, and drawing the cooled extruded mass out of the calibration (3). Furthermore, the present invention provides foamed profiles obtainable by said method.

## Description

### Technical Field

The present invention relates to a method for manufacturing foamed profiles and to foamed profiles obtainable by the method.

### Description of the Background Art

Foamed profiles are used, for example, as an insulating strip for a composite profile for window, door or façade elements comprising profile parts connected by the insulating strip, and as a spacer for an insulating glass unit comprising window panes and the spacer in an interspace between the window panes.

On the one hand, such foamed profiles have to provide good thermal insulation for said window, door or façade elements or insulating glass units, wherein a thermal conductivity of, for example, < 0.25 W/m² · K is desired. On the other hand, such foamed profiles have to provide a high stiffness and stability for use in said window, door or façade elements or insulating glass units, as shown by an elasticity module of, for example, > 3500 MPa. However, in view of the materials used for foamed profiles, it is usually difficult to simultaneously achieve a low thermal conductivity and a high stiffness and stability, such that the conventional materials merely provide a more or less satisfying tradeoff between said properties.

Conventionally, several approaches concerning the materials of solid and foamed profiles for window, door or façade elements or insulating glass units are known.

For example, thermosetting plastics, like, for example, epoxy or polyester resins, have a low thermal conductivity of approximately 0.2 W/m² · K, however, a low stiffness (e.g., typically 2300 MPa for an epoxy resin). Although the stiffness of thermosetting plastics is considerably raised by adding large amounts of continuous glass fibers in a pultrusion process, the thermal conductivity thereof is also considerably raised by this measure. Furthermore, the pultrusion process results in that the fibers become oriented in the pultrusion direction and thus orthogonal to the main direction of strain.

Commodity plastics, like, for example, polyolefins (e.g., polyethylene (PE), polypropylene (PP)) and polyvinyl chloride (PVC), have a rather low thermal conductivity (0.17 to 0.33 W/m² · K), however, their stiffness and rigidity is not sufficient for use in such profiles. In order to raise their stiffness and rigidity, glass fibers may be introduced into the commodity plastics. However, the introduction of glass fibers diadvantageously raises the thermal conductivity of the resulting profiles. A corresponding disadvantageous effect is achieved by introducing other mineral fillers into the plastics.

Engineering plastics, like, for example, polyamide (PA) and polybutylene terephthalate (PBT), have the desired stiffness and rigidity, however, generally have a higher thermal conductivity than commodity plastics.

A further approach is the use of material combinations in particular of engineering plastics, like, for example polyamide/polyphenylene oxide (PA/PPO) or acrylnitrile-butadiene-styrene polymer/polyamide (ABS/PA), which combine the advantages of engineering plastics (high stiffness and rigidity) and commodity plastics (low thermal conductivity). However, such material combinations are costly and their extrusion processability is poor due to their narrow processing temperature range.

In addition, lowering the thermal conductivity of materials for such profiles may be achieved by introducing gas bubbles into the material by chemical or physical foaming, such that foamed profiles are obtained. However, the introduction of gas bubbles deteriorates the mechanical properties of the foamed profiles, like, for examples, stiffness and rigidity. Said deterioration is particularly noticeable, if the distribution range of the gas bubble size and position within the foamed profile is large.

DE 10 2013 207 978 A1 discloses a method for manufacturing a plastic profile having microinclusions.

US 4,473,665 discloses a method for producing closed cell, microcellular-foamed structures in preformed polymeric materials, wherein the method comprises saturating the material at an elevated pressure between about 1 cc (STP)/gram and about 4 cc (STP)/gram with a uniform concentration of a non-reactive gas, heating the material to its glass transition temperature, reducing the pressure to a state where the material is super-saturated with gas and a very large number of cells are nucleated, and rapidly dropping the temperature of the material to prevent cell growth, whereby a foamed polymeric material having voids in the order of about 2 to 25 microns is produced.

EP 1 242 709 B2 (referring to DE 195 10 944 C1 with regard to the method) discloses a solid or hollow-chamber plastics profile, in particular for tensile, bending and/or pressure loads, having a surface layer of a compact, non-porous first plastics material and a core region having a fine-pored, closed-cell cellular structure of a second plastics material, the cellular structure in the core region having an average cell size ranging from 0.005 to 0.15 mm, wherein said plastics profile is manufactured by a method, wherein calibration and cooling of the profile is achieved in a calibration and cooling unit while maintaining the pressing power.

Despite the above-mentioned prior art methods, there is still a need for an improvement regarding the distribution range of the gas bubble size and position within the foamed profile.

### Summary of the Invention

In view of the above, it is an object of the invention to provide an improved method for manufacturing foamed profiles providing foamed profiles having an improved tradeoff between a low thermal conductivity and a high stiffness and stability.

This object is solved by the method according to claim 1 or 12 and a foamed profile according to claim 15. Further developments are provided in the dependent claims.

The method for manufacturing foamed profiles is carried out using an extruder and a calibration, wherein the extruder has a melting part, a pressure reducing part and an extrusion die having a melt channel. The method comprises the steps of melting a mixture comprising a thermoplastic polymer and a chemical foaming agent in the melting part of the extruder, wherein the mixture has a water content of 0.5 wt.-% or less, introducing an inert gas into the molten mixture to obtain a molten mass containing the introduced inert gas, reducing the pressure of the molten mass containing the introduced inert gas in the pressure reducing part, expanding the molten mass having the reduced pressure in the melt channel of the extrusion die and extruding the same, transferring the extruded molten mass into the calibration, whereby the extruded molten mass is cooled, and drawing the cooled extruded mass out of the calibration.

The extruder used in the present method can be selected from conventional extruders used in the field of plastics profile extruding, like, for example, common single- or double-screw extruders. The extrusion die has a melt channel, which can be heated to the required temperature for providing a proper extrusion of the respective thermoplastic materials.

The calibration used in the present method can be selected from conventional calibrations used in the field of plastics profile extruding. The calibration is thermally separated from the extrusion die by a sealing element, which is made from a material having a low thermal conductivity of < 5 W/m² · K, preferably < 1 W/m² · K, in particular of 0.1 to 1.0 W/m² · K, and which is heat resistant. The material may be any suitable material having the above-mentioned low thermal conductivity and heat resistance, however, is preferably selected from ceramics, glass fibre-reinforced thermosetting plastics and silicone resin-impregnated mica paper. Thus, according to the present method, no air gap is present between the extrusion die and the calibration.

The thermoplastic polymer used in the present method may be any thermoplastic material processable with common extrusion equipment. Preferably, the thermoplastic polymer is selected from the group consisting of polyethylene terephthalates, polyimides, polyetherimides, polytetrafluoroethylenes, polyvinylchlorides, polyamides, polycarbonates, polymethylmethacrylates, polystyrenes, polysiloxanes, polyphenylene oxides, polyketones, polyetheretherketones, biopolymers, and mixtures thereof, or a mixture thereof with one or more polyolefin(s).

Preferably, the thermoplastic polymer is selected from the group consisting of PA66, PA6, PA/PPO, SPS, and biopolymers, like, for example, PA4.10, PA5.5, PA5.10, PA6.10, PA10.10, PA11 and PA10.12, and mixtures thereof, or a mixture thereof with one or more polyolefin(s). The above-mentioned biopolymers are produced from natural resources like sebacic acid produced from castor oil, as it is well known to the skilled person.

Furthermore, the mixture comprising a thermoplastic polymer and a chemical foaming agent used in the present method may include further optional additives commonly used in the processing of thermoplastic polymers, like, for example, antioxidants, heat and color stabilizers, heat aging and hydrolysis stabilizers. These optional additives may be incorporated in the usual amounts such that the basic mechanical and thermal conductivity properties of the obtained foam profiles are not deteriorated.

The chemical foaming agent used in the present method may be any chemical foaming agent known to the skilled person and used in extrusion of thermoplastic polymers to provide foamed materials. Preferably, the chemical foaming agent is an exothermic chemical foaming agent, which releases reaction heat, such that a complete and rapid decomposition is achieved. Preferred examples of the exothermic chemical foaming agent are 5-phenyltetrazol and p-toluenesulfonylsemicarbazide.

The above-mentioned chemical foaming agent is preferably used in an amount of 0.2 to 1.5 wt.-%, more preferably of 0.3 to 1.3 wt.-%, and in particular of 0.5 to 1.0 wt.-% on the basis of the weight of the mixture of the thermoplastic polymer and the chemical foaming agent.

Preferably, according to the present method, the mixture comprising a thermoplastic polymer and a chemical foaming agent is obtainable by the following method.

In particular, the present method for manufacturing a mixture comprising a thermoplastic polymer and a chemical foaming agent comprises the steps of providing a masterbatch comprising a first thermoplastic polymer and a chemical foaming agent, mixing the masterbatch with a second thermoplastic polymer, and drying the mixture of the masterbatch with the second thermoplastic polymer below the reaction temperature of the chemical foaming agent to a water content of 0.1 wt.-% or less.

In the present method for manufacturing a mixture comprising a thermoplastic polymer and a chemical foaming agent, the first thermoplastic polymer is selected from the group consisting of polyolefins, polyethylene terephthalates, polyimides, polyetherimides, polytetrafluoroethylenes, polyvinylchlorides, polyamides, polycarbonates, polymethylmethacrylates, polystyrenes, polysiloxanes, polyphenylene oxides, polyketones, polyetheretherketones, biopolymers, and mixtures thereof.

Furthermore, in the present method for manufacturing a mixture comprising a thermoplastic polymer and a chemical foaming agent, the second thermoplastic polymer is selected from the group consisting of polyethylene terephthalates, polybutylene terephthalates, polyimides, polyetherimides, polytetrafluoroethylenes, polyvinylchlorides, polyamides, polycarbonates, polymethylmethacrylates, polystyrenes, polysiloxanes, polyphenylene oxides, polyketones, polyetheretherketones, biopolymers, and mixtures thereof, wherein the second thermoplastic polymer is preferably selected from the group consisting of PA66, PA6, PA/PPO, SPS, and the biopolymers PA4.10, PA5.5, PA5.10, PA6.10, PA10.10, PA11 and PA10.12, and mixtures thereof.

In the above-mentioned method, the first and second thermoplastic polymers may be identical. However, in order to save costs in case the second thermoplastic polymer is expensive, the masterbatch can also be prepared with an inexpensive polyolefin, like, for example, polyethylene or polypropylene, as the carrier material for the chemical foaming agent and optional further additives as mentioned above.

In the above-mentioned method, drying the mixture of the masterbatch with the second thermoplastic polymer below the reaction temperature of the chemical foaming agent to a water content of 0.5 wt.-% or less can be carried out by any suitable drying method known to the skilled person. Furthermore, the water content of the mixture is preferably in a range of 0.01 to 0.5 wt.-%, more preferably of 0.03 to 0.3 wt.-%, in particular 0.03 to 0.1 wt.-%.

According to the present method the melt temperature in the step of melting the mixture in the extruder is in the range from the melting point of the mixture to the melting point of the mixture + 30 K, preferably in the range from the melting point of the mixture to the melting point of the mixture + 25 K, in particular in the range from the melting point of the mixture to the melting point of the mixture + 20 K. Thus, for example, in case of using PA6 having a melting point of about 220 °C (which may slightly vary due to the presence of the chemical foaming agent and optionally other additives), the melt temperature in the step of melting the mixture in the extruder may be in a range of about 220 °C to 250 °C, preferably of about 220 °C to 245 °C, in particular of about 220 °C to 240 °C.

According to the method of the present invention the gas pressure in the step of introducing the inert gas into the molten mixture is preferably in the range from 120 to 250 bar, preferably from 130 to 230 bar, in particular from 150 to 200 bar. As the inert gas, any known inert gas may be used, like, for example, N₂, CO₂ and Ar, wherein N₂ and CO₂ are preferably used.

According to the present method the amount of gas in the step of introducing the inert gas into the molten mixture is preferably in the range from 0.3 to 2.5 vol.-%, more preferably from 0.4 to 2.3 vol.-%, in particular from 0.5 to 2.0 vol.-%, based on the volume of the molten mixture in the extruder.

According to the present method, in order to provide a uniform introduction of gas bubbles into the molten mixture and thus finally in the foamed profile, the dosing amount (volume) of the inert gas is regulated according to the throughput of the molten mixture or mass through the extruder, which is sensed by suitable sensors.

According to the present method, the reduced pressure in the step of reducing the pressure of the molten mass containing the introduced inert gas is preferably above the reaction pressure, i.e., the minimum pressure at which the generation of gas bubbles does not occur. This pressure depends on the temperature of the molten mass. Preferably, the reduced pressure is from 15 to 60 bar, more preferably from 18 to 55 bar and in particular from 20 to 50 bar. The reduced pressure is provided by changing the geometry of the extruder screw channel in a known manner.

According to the present method, in the step of expanding the molten mass in the melt channel in the extrusion die, the cross-section of the melt channel is preferably expanded by a factor of 2 to 12, more preferably by a factor of 2.5 to 11 and in particular by a factor of 3 to 10. Moreover, the expansion of the cross-section of the melt channel preferably occurs over the whole cross-section in a uniform manner.

According to the present method, in the step of transferring the extruded molten mass into the calibration the temperature reduction ΔT of the extruded molten mass is in the range of 110 K to 290 K, preferably in the range of 200 K to 280 K, in particular in the range of 220 K to 270 K. By this measure, the agglomeration of cells (secondary cell growth) is reduced, improving uniformity of the gas bubbles in the foamed profile, and a low internal stress of the foamed profile can be obtained.

Furthermore, the pressure of the extruded molten mass before the same enters the calibration is held above 1.0 bar, preferably above 1.05 bar and in particular at about 1.1 bar. By this measure, a compact skin layer (i.e. a skin layer being smooth and having a low number of pores) of the foamed profile can be obtained.

According to the present method, due to the specific methods steps as outlined above, the distribution range of the gas bubble size and position within the foamed profile can be made narrow, such that the foamed profile obtainable according to the present method not only has low thermal conductivity, but also a high stiffness and stability.

The present invention further provides a foamed profile obtainable by the present method for manufacturing foamed profiles, wherein the foamed profile is an insulating strip for a composite profile for window, door or façade elements comprising profile parts connected by the insulating strip, and/or a spacer for an insulating glass unit comprising window panes and the spacer in an interspace between the window panes. Details of such insulating strips and spacers can be found in EP 0 978 619 A2 and EP 1 980 701 B1, respectively.

The foamed profile obtainable by the present method for manufacturing foamed profiles preferably includes a reinforcing filler selected from the group consisting of 15 to 50 wt.-%, preferably 20 to 45 wt.-%, in particular 25 to 35 wt.-% glass fibers, 5 to 30 wt.-%, preferably 10 to 25 wt.-%, in particular 15 to 20 wt.-% glass spheres, and 2 to 20 wt.-%, preferably 5 to 18 wt.-%, in particular 8 to 15 wt.-% carbon fibers.

Additional features and objects will be apparent from the description of the exemplary embodiments with consideration of the figure.

### Brief Description of the Drawing

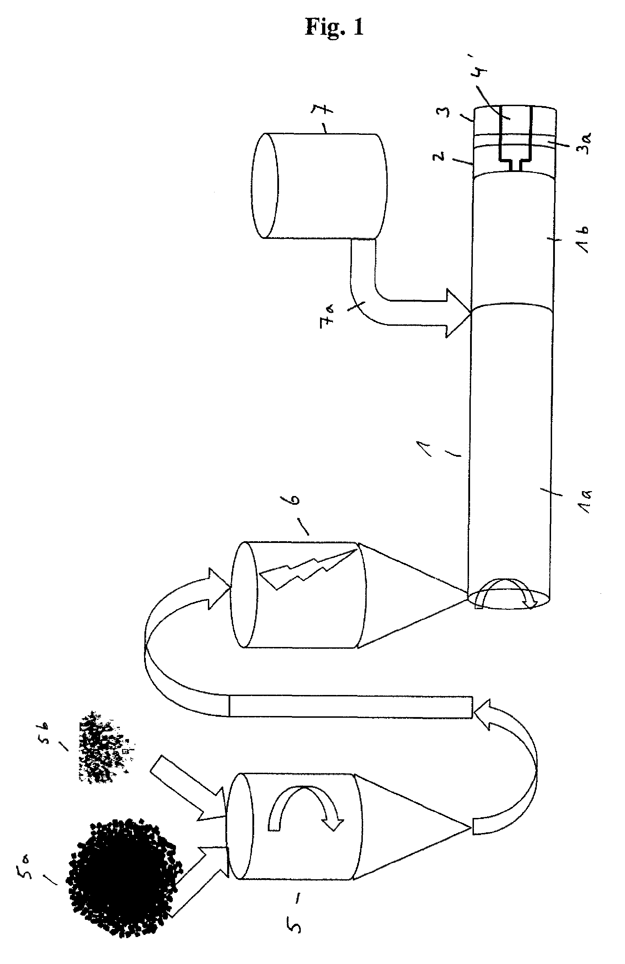

Fig. 1 shows an extruder unit for carrying out the present method for manufacturing foamed profiles.

An embodiment of the present teachings will be described in greater detail below with references to the figure.

Fig. 1 shows an extrusion unit for carrying out the present method for manufacturing foamed profiles. According to Fig. 1, the extrusion unit is provided with a single-screw extruder 1, a calibration 3, an inert gas reservoir 7 containing N₂ as an inert gas 7a, a mixing vessel 5 and a dryer 6.

According to the present method for manufacturing a mixture comprising a thermoplastic polymer and a chemical foaming agent, PA66 as a second thermoplastic polymer 5a is mixed with a masterbatch 5b in an amount of 5 wt.-% in the mixing vessel. The masterbatch 5b includes a mixture of PA66 with 5-phenyltetrazol as an exothermic chemical foaming agent in an amount of 7 wt.-% on the basis of the weight of the PA66 and the exothermic chemical foaming agent, such that a corresponding mixture is provided. Said mixture is transferred into a dryer 6, wherein the mixture is dried at temperature of 80 °C to a water content of 0.05 wt.-%.

According to the present method for manufacturing foamed profiles, the dried mixture is then introduced into the extruder and is molten at a temperature of 280 °C in the melting part 1a of the extruder 1. N₂ as an inert gas 7a is introduced into the extruder 1 from the inert gas reservoir 7 in an amount of 1.5 vol.-%, based on the volume of the molten mixture, in order to be mixed into the molten mixture provided in the melting part 1a of the extruder 1, such that a molten mass is obtained. The molten mass with the introduced N₂ is further conveyed to the pressure reducing part 1b of the extruder 1, wherein the pressure of the molten mass is reduced from 160 bar to 30 bar. The molten mass having a pressure of 30 bar then reaches the extrusion die 2 heated at 280 °C and the melt channel 4 present therein. As shown in Fig. 1, the cross-section of the melt channel is expanded by a factor 5 in the direction of conveying the molten mass. The molten mass is then transferred through the sealing element 3a made of a glass fibre-reinforced thermosetting plastics, which provides a thermal separation between the extrusion die 2 held at 280 °C and the calibration 3 held at 10 °C by water cooling, and into the calibration 3, whereby the extruded molten mass is cooled to about 10 °C. Finally, after having passed through the calibration 3, the cooled mixture is drawn out of the calibration 3 with a common device not shown in Fig. 1, such that a foamed profile is provided.

The obtained foamed profile had a thermal conductivity of < 0.22 W/m² · K (measured according to DIN EN 12939) and an elasticity module of 3900 MPa (measured according to DIN EN ISO 527-2 with a specimen cut out of the foamed profile).

Each of the various features and teachings disclosed above may be utilized separately or in conjunction with other features and teachings to provide representative examples of the present invention, which examples utilize many of these additional features and teachings both separately and in combination, were described above in detail with reference to the attached drawings. This detailed description is merely intended to teach a person of skill in the art further details for practicing preferred aspects of the present teachings and is not intended to limit the scope of the invention. Therefore, combinations of features and steps disclosed in the detailed description may not be necessary to practice the invention in the broadest sense, and are instead taught merely to particularly describe representative examples of the present teachings.

Moreover, the various features of the representative examples and the dependent claims may be combined in ways that are not specifically and explicitly enumerated in order to provide additional useful embodiments of the present teachings. In addition, it is expressly noted that all features disclosed in the description and/or the claims are intended to be disclosed separately and independently from each other for the purpose of original disclosure, as well as for the purpose of restricting the claimed subject matter independent of the compositions of the features in the embodiments and/or the claims. It is also expressly noted that all value ranges or indications of groups of entities disclose every possible intermediate value or intermediate entity for the purpose of original disclosure, as well as for the purpose of restricting the claimed subject matter.

### List of reference numerals

- 1:: Extruder
- 1a:: Melting part
- 1b:: Pressure reducing part
- 2:: Extrusion die
- 3:: Calibration
- 3a:: Sealing element
- 4:: Melt channel
- 5:: Mixing vessel
- 5a:: Second thermoplastic polymer
- 5b:: Masterbatch
- 6:: Dryer
- 7:: Inert gas reservoir
- 7a:: Inert gas

## Claims

1. A method for manufacturing foamed profiles using an extruder (1) and a calibration (3), wherein the extruder (1) has a melting part (1a), a pressure reducing part (1b) and an extrusion die (2) having a melt channel (4), comprising the steps of
melting a mixture comprising a thermoplastic polymer and a chemical foaming agent in the melting part (1a) of the extruder (1), wherein the mixture has a water content of 0.5 wt.-% or less,
introducing an inert gas into the molten mixture to obtain a molten mass containing the introduced inert gas,
reducing the pressure of the molten mass containing the introduced inert gas in the pressure reducing part (1b),
expanding the molten mass having the reduced pressure in the melt channel (4) of the extrusion die (2) and extruding the same,
transferring the extruded molten mass into the calibration (3), whereby the extruded molten mass is cooled, and
drawing the cooled extruded mass out of the calibration (3).

2. The method according to claim 1, wherein the thermoplastic polymer is selected from the group consisting of polyethylene terephthalates, polyimides, polyetherimides, polytetrafluoroethylenes, polyvinylchlorides, polyamides, polycarbonates, polymethylmethacrylates, polystyrenes, polysiloxanes, polyphenylene oxides, polyketones, polyetheretherketones, biopolymers, and mixtures thereof, or a mixture thereof with one or more polyolefin(s), and/or wherein the thermoplastic polymer is selected from the group consisting of PA66, PA6, PA/PPO, SPS, and the biopolymers PA4.10, PA5.5, PA5.10, PA6.10, PA10.10, PA11 and PA10.12, and mixtures thereof, or a mixture thereof with one or more polyolefin(s).

3. The method according to claim 1 or 2, wherein the chemical foaming agent is an exothermic chemical foaming agent.

4. The method according to claim 3, wherein the exothermic chemical foaming agent is 5-phenyltetrazol or p-toluenesulfonylsemicarbazide.

5. The method according to any one of claims 1 to 4, wherein the chemical foaming agent is used in an amount in the range of 0.2 to 1.5 wt.-% on the basis of the weight of the mixture of the thermoplastic polymer and the chemical foaming agent.

6. The method according to any one of claims 1 to 5, wherein the melt temperature in the step of melting the mixture in the melting part (1a) of the extruder (1) is in the range from the melting point of the mixture to the melting point of the mixture + 30 K.

7. The method according to any one of claims 1 to 6, wherein the gas pressure in the step of introducing the inert gas into the molten mixture is in the range from 120 to 250 bar.

8. The method according to any one of claims 1 to 7, wherein the amount of gas introduced in the step of introducing an inert gas into the molten mixture is in the range from 0.3 to 2.5 vol.-% based on the volume of the molten mixture in the extruder.

9. The method according to any one of claims 1 to 8, wherein the reduced pressure in the step of reducing the pressure of the molten mass containing the introduced inert gas is from 15 to 60 bar.

10. The method according to any one of claims 1 to 9, wherein in the step of expanding the molten mass in the melt channel (4) in the extrusion die (2) the cross-section of the melt channel (4) is expanded by a factor of 2 to 12.

11. The method according to any one of claims 1 to 10, wherein, in the step of transferring the extruded molten mass into the calibration (3), the temperature reduction ΔT of the extruded molten mass is in the range of 110 K to 300 K.

12. A method for manufacturing a mixture comprising a thermoplastic polymer and a chemical foaming agent, comprising the steps of
providing a masterbatch (5b) comprising a first thermoplastic polymer and a chemical foaming agent,
mixing the masterbatch (5b) with a second thermoplastic polymer (5a), and
drying the mixture of the masterbatch (5b) with the second thermoplastic polymer (5a) at a temperature below the reaction temperature of the chemical foaming agent to a water content of 0.1 wt.-% or less.

13. The method according to claim 12, wherein the first thermoplastic polymer is selected from the group consisting of polyolefins, polyethylene terephthalates, polyimides, polyetherimides, polytetrafluoroethylenes, polyvinylchlorides, polyamides, polycarbonates, polymethylmethacrylates, polystyrenes, polysiloxanes, polyphenylene oxides, polyketones, polyetheretherketones, biopolymers, and mixtures thereof, and/or wherein the second thermoplastic polymer (5a) is selected from the group consisting of polyethylene terephthalates, polybutylene terephthalates, polyimides, polyetherimides, polytetrafluoroethylenes, polyvinylchlorides, polyamides, polycarbonates, polymethylmethacrylates, polystyrenes, polysiloxanes, polyphenylene oxides, polyketones, polyetheretherketones, biopolymers, and mixtures thereof, and/or wherein the second thermoplastic polymer (5a) is selected from the group consisting of PA66, PA6, PA/PPO, SPS, and the biopolymers PA4.10, PA5.5, PA5.10, PA6.10, PA10.10, PA11 and PA10.12, and mixtures thereof.

14. The method according to any one of claims 1 to 11, wherein the mixture comprising a thermoplastic polymer and a chemical foaming agent is obtained by the method according to claims 12 or 13.

15. A foamed profile obtainable by the method according to any one of claims 1 to 11 or 14, wherein the foamed profile is an insulating strip for a composite profile for window, door or façade elements comprising profile parts connected by the insulating strip, and/or a spacer for an insulating glass unit comprising window panes and the spacer in an interspace between the window panes.
